# EUROPÄISCHE PATENTANMELDUNG

(11) **EP 3 840 160 A1**
(43) Veröffentlichungstag der Anmeldung: **23.06.2021**
(21) Anmeldenummer: 20207165.0
(22) Anmeldetag: 12.11.2020
(51) Int. Cl.: H02J 3/26, F03D 7/02, F03D 7/04, F03D 9/25

(54) **VERFAHREN ZUM STEUERN EINER WINDENERGIEANLAGE**

(30) Priorität: 16.12.2019 DE 102019134458
(71) Anmelder: Wobben Properties GmbH, 26607 Aurich (DE)
(72) Erfinder: STRAFIEL, Christian, 26607 Aurich (DE); GERTJEGERDES, Stefan, 26603 Aurich (DE); TREVISAN, Aramis Schwanka, 26605 Aurich (DE); MACKENSEN, Ingo, 26607 Aurich (DE)
(74) Vertreter: Eisenführ Speiser

(57) **Zusammenfassung**

Die vorliegende Erfindung betrifft ein Verfahren zum Steuern einer Windenergieanlage und/oder eines wenigstens eine Windenergieanlage aufweisenden Windparks, insbesondere bei asymmetrischen Netzspannungen, umfassend die Schritte: Erfassen einer ersten Spannung einer ersten Phase, einer zweiten Spannung einer zweiten Phase und einer dritten Spannung einer dritten Phase eines dreiphasigen, elektrischen Systems, Berechnen eines symmetrischen Spannungsgegensystems aus den erfassten Spannungen, umfassend: eine erste Gegensystemspannung, eine zweite Gegensystemspannung und eine dritte Gegensystemspannung, Vorgeben von Sollwerten für ein Stromgegensystem in Abhängigkeit von dem berechneten, symmetrischen Spannungsgegensystem, umfassend: eine erste Gegensystemstromkomponente für die erste Phase, eine zweite Gegensystemstromkomponente für die zweite Phase und eine dritte Gegensystemstromkomponente für die dritte Phase, wobei die Sollwerte so bestimmt werden, dass es zu einer Symmetrierung der erfassten Spannungen kommt, Einspeisen eines asymmetrischen dreiphasigen Wechselstromes in ein Windparknetz oder ein elektrisches Versorgungsnetz in Abhängigkeit der vorgegebenen Sollwerte.

## Beschreibung

Die vorliegende Erfindung betrifft ein Verfahren zum Steuern einer Windenergieanlage und/oder eines wenigstens eine Windenergieanlage aufweisenden Windparks.

Windenergieanlagen speisen üblicherweise einen im Wesentlichen symmetrischen Strom in ein dreiphasiges Windparknetz und/oder ein dreiphasiges, elektrisches Versorgungsnetz ein.

Das Einspeisen eines dreiphasigen, symmetrischen Stromes kann grundsätzlich auch als symmetrische Einspeisung bezeichnet werden.

Eine symmetrische Einspeisung bedeutet dabei insbesondere, dass der eingespeiste Strom drei, im Wesentlichen 120° zueinander verschobene Phasen gleicher Amplitude aufweist.

Sofern das dreiphasige Windparknetz und/oder das dreiphasige, elektrische Versorgungsnetz bspw. eine asymmetrische Netzspannung aufweist, also drei Phasen ungleicher Amplitude und/oder drei Phasen ungleicher Phasenverschiebung, kann eine symmetrische Einspeisung diesen asymmetrischen Fehler zumeist nicht beheben.

Solche asymmetrischen Netzspannungen können bspw. durch lange Freileitungen verursacht werden, an die die Windenergieanlage bzw. der Windpark angeschlossen ist.

Das Deutsche Patent- und Markenamt hat in der Prioritätsanmeldung zur vorliegenden Anmeldung folgenden Stand der Technik recherchiert: DE 10 2012 220 582 A1.

Aufgabe der vorliegenden Erfindung ist es daher, zumindest eines der oben genannten Probleme zu adressieren, insbesondere soll eine Lösung vorgeschlagen werden, mittels derer eine Symmetrierung der Netzspannung erfolgt, insbesondere in einem Normalbetrieb einer Windenergieanlage und/oder eines Windparks.

Erfindungsgemäß wird somit ein Verfahren zum Steuern einer Windenergieanlage und/oder eines wenigstens eine Windenergieanlage aufweisenden Windparks insbesondere bei asymmetrischen Netzspannungen, vorgeschlagen, umfassend die Schritte: Erfassen einer ersten Spannung einer ersten Phase, einer zweiten Spannung einer zweiten Phase und einer dritten Spannung einer dritten Phase eines dreiphasigen, elektrischen Systems, Berechnen eines symmetrischen Spannungsgegensystems aus den erfassten Spannungen, umfassend: eine erste Gegensystemspannung, eine zweite Gegensystemspannung und eine dritte Gegensystemspannung, Vorgeben von Sollwerten für ein Stromgegensystem in Abhängigkeit von dem berechneten, symmetrischen Spannungsgegensystem, umfassend: eine erste Gegensystemstromkomponente für die erste Phase, eine zweite Gegensystemstromkomponente für die zweite Phase und eine dritte Gegensystemstromkomponente für die dritte Phase, wobei die Sollwerte so bestimmt werden, dass es zu einer Symmetrierung der erfassten Spannungen kommt, Einspeisen eines asymmetrischen dreiphasigen Wechselstromes in ein Windparknetz oder ein elektrisches Versorgungsnetz in Abhängigkeit der vorgegebenen Sollwerte.

Die Windenergieanlage bzw. der Windpark sind somit bevorzugt an ein dreiphasiges, elektrisches Netz angeschlossen, bspw. an ein Windparknetz oder ein elektrisches Versorgungsnetz.

Bevorzugt sind die Windenergieanlage bzw. der Windpark an einem Anschlusspunkt mit einem dreiphasigen, elektrischen Windparknetz oder einem dreiphasigen, elektrischen Versorgungsnetz verbunden, wobei der Anschlusspunkt insbesondere eine asymmetrische Netzspannung aufweist, die insbesondere durch eine Netztopologie hervorgerufen ist.

In einem ersten Schritt werden nun die Spannungen des elektrischen Netzes erfasst, bspw. durch Messen der Spannungen am Anschlusspunkt der Windenergieanlage.

Der Anschlusspunkt kann bspw. der Umrichter der Windenergieanlage sein oder der Netzanschlusspunkt des Windparks.

Anschließend wird aus den so erfassten Spannungen wenigstens ein symmetrisches Spannungsgegensystem berechnet, bspw. mittels der Methode der symmetrischen Komponenten.

Das Spannungsgegensystem weist dann bevorzugt eine erste Gegensystemspannung, eine zweite Gegensystemspannung und eine dritte Gegensystemspannung auf. Bevorzugt sind diese drei Gegensystemspannungen jeweils um 120° zueinander in der Phase verschoben.

Aus diesem symmetrischen Spannungsgegensystem werden dann Sollwerte für ein Stromgegensystem ermittelt, die so bestimmt werden, dass es zu einer Symmetrierung der erfassten Spannungen, insbesondere am Anschlusspunkt, kommt.

Hierfür kann bspw. ein Regler verwendet werden, der dazu eingerichtet ist, die Gegensystemspannung zu Null zu regeln, wobei die Stellgröße das Gegenstromsystem ist und ein ideales Gegensystem verwendet wird, welches Null ist, also keine Asymmetrie aufweist. Die Sollspannung im Gegensystem ist also Null, d.h. die berechnete Gegensystemspannung kann direkt als Reglereingang verwendet werden, wobei der Gegensystemstrom den Reglerausgang bzw. Stellgröße bildet.

In Abhängigkeit dieser Sollwerte wird dann ein asymmetrischer, dreiphasiger Wechselstrom mittels der Windenergieanlage bzw. des Windparks erzeugt und in das Windparknetz bzw. das elektrische Versorgungsnetz eingespeist.

Zum Einspeisen des asymmetrischen, dreiphasigen Wechselstroms weist die Windenergieanlage bspw. einen Wechselrichter auf, bevorzugt einen Vollumrichter. Der Wechselrichter kann dabei bspw. aus mehreren Wechselrichtermodulen aufgebaut sein und/oder mittels einer Steuereinheit angesteuert werden.

Es wird also insbesondere vorgeschlagen, einen (Voll-)Umrichter einer Windenergieanlage so im Normalbetrieb zu steuern, dass das elektrische Netz symmetriert wird, also der Netzsymmetriegrad verbessert wird.

Durch die asymmetrische Einspeisung, insbesondere eines asymmetrischen Stromes, kann einer asymmetrischen Spannung im elektrischen Netz entgegengewirkt werden, insbesondere so, dass die Spannung im elektrischen Netz symmetriert wird.

Das vorgeschlagene Verfahren ist somit besonders gut dazu geeignet an Anschlusspunkten mit stets asymmetrischen Netzspannungen verwendet zu werden, wie sie bspw. an langen Freileitung auftreten können, bspw. in Kanada oder in Russland, aber auch Brasilien, Australien oder Schweden.

Darüber hinaus ermöglicht das vorgeschlagene Verfahren zudem derart einzuspeisen, dass auf eine Verdrillung langer Übertragungsleitungen verzichtet werden kann.

Ferner wird diesbezüglich insbesondere auch vorgeschlagen, das vorstehend oder nachstehend beschriebene Verfahren zusätzlich zu einer üblichen, symmetrischen Einspeisung zu verwenden, insbesondere dann, wenn die Windenergieanlage bzw. der Windpark an einem Netzanschlusspunkt eines elektrischen Netzes angeschlossen ist, der auf Grund der Netztopologie dazu neigt, eine asymmetrische Spannung aufzuweisen.

Vorzugsweise umfasst das Erfassen der ersten, zweiten und dritten Spannung wenigstens ein Messen einer ersten, zweiten und dritten Phase, insbesondere am Ausgang eines Wechselrichters der Windenergieanlage und/oder eines Anschlusspunktes.

Die Windenergieanlage bzw. der Windpark sind somit bevorzugt an einem Anschlusspunkt mit einem Windparknetz bzw. einem elektrischen Versorgungsnetz verbunden.

Zudem weist die Windenergieanlage wenigstens einen Wechselrichter auf, der dazu eingerichtet ist, einen asymmetrischen dreiphasigen Wechselstrom in das Windparknetz und/oder das elektrische Versorgungsnetz einzuspeisen.

In einer bevorzugten Ausführungsform weist der Wechselrichter hierfür wenigstens eine Steuereinheit auf, die dazu eingerichtet ist, ein vorstehend oder nachstehend beschriebenes Verfahren auszuführen.

Insbesondere weist der Wechselrichter dabei eine Spannungserfassung zur Erfassung der ersten, zweiten und dritten Spannung auf, welche bevorzugt am Ausgang des Wechselrichters die Spannungen erfasst.

Vorzugsweise umfasst das Erfassen der ersten, zweiten und dritten Spannung ein Ermitteln einer entsprechenden ersten, zweiten und dritten Phasenlage und einer entsprechenden ersten, zweiten und dritten Amplitude.

Es wird somit insbesondere auch vorgeschlagen, dass Amplitude und Phasenlage aller Spannungen erfasst wird.

Bevorzugt erfolgt das Erfassen der ersten, zweiten und dritten Spannung mittels einer dreiphasigen Spannungserfassung, die dazu eingerichtet ist, jeweils eine Amplitude und eine Phasenlage zu erfassen.

In einer besonders bevorzugten Ausführungsform ist die dreiphasige Spannungserfassung mit einer bzw. der Steuereinheit eines bzw. des Wechselrichters der Windenergieanlage signalleitend verbunden.

Vorzugsweise erfolgt das Bestimmen der Sollwerte für einen Punkt an einem Ausgang eines bzw. des Wechselrichters.

Es wird somit insbesondere auch vorgeschlagen, dass die Symmetrierung am Ausgang des Wechselrichters, insbesondere der Windenergieanlage, vorgenommen wird, insbesondere also im Wesentlichen dort, wo auch die Spannungen erfasst werden.

Vorzugsweise erfolgt das Einspeisen unter Verwendung einer Strombegrenzung mit einem Faktor k.

Es wird somit insbesondere auch vorgeschlagen, dass das vorstehend oder nachstehend beschriebene Verfahren unter Verwendung einer Strombegrenzung, insbesondere einer dynamischen Strombegrenzung, durchgeführt wird.

Dies ist besonders vorteilhaft, wenn das vorstehend oder nachstehend beschriebene Verfahren zusätzlich zu einer normalen Einspeisung ausgeführt wird.

Insbesondere liegt dem die Annahme zu Grunde, dass bei Überlagerung eines symmetrischen Systems (normale Einspeisung; Mitsystem) und asymmetrischer Einspeisung (zur Symmetrierung; Gegensystem) Stromamplituden entstehen könnten, die größer sind als die maximal zulässigen Werte, bspw. des Wechselrichters.

In einer besonders bevorzugten Ausführungsform erfolgt die Strombegrenzung in Abhängigkeit des Mitsystems.

Vorzugsweise werden die berechneten Gegensystemspannungen in dq-Koordinaten mittels einer amplitudeninvarianten dq-Transformation transformiert.

Es wird somit insbesondere auch vorgeschlagen, die berechneten Gegensystemspannungen mittels einer amplitudeninvarianten dq-Transformation in rotierende dq-Koordinaten zu transformieren.

Die Gegensystemspannungen werden also in ein rotierendes dq-Referenzsystem überführt.

Die so erstellten d- und q-Komponenten können dann anschließend gefiltert werden, insbesondere um Netzverzerrungen und hochfrequentes Messrauschen zu eliminieren, und einer Regelungskette zugeführt werden, die die entsprechenden Gegensystemströme ermittelt.

Vorzugsweise umfasst das Verfahren ferner den Schritt: Berechnen eines symmetrischen Spannungsmitsystems aus den erfassten Spannungen, umfassend: eine erste Mitsystemspannung, eine zweite Mitsystemspannung und eine dritte Mitsystemspannung.

Es wird somit insbesondere vorgeschlagen, dass das Verfahren zwei Teilverfahren umfasst.

Ein erstes Teilverfahren, welches den Leistungsfluss symmetrisch im Mitsystem regelt, der bspw. durch Leistungssollwerte vorgegeben wird und ein zweites Teilverfahren, welches die Symmetrierung des elektrischen Netzes asymmetrisch im Gegensystem regelt.

Hierdurch entsteht ein Strom umfassend zwei Komponenten, wobei eine erste Komponente dazu dient entsprechende Leistung eines Leistungssollwertes in das elektrische Netz einzuspeisen und eine zweite Komponente, die dazu dient das elektrische Netz zu symmetrieren.

Es wird also insbesondere auch vorgeschlagen, das Verfahren zusätzlich zu einer üblichen, symmetrischen Einspeisung zu verwenden, insbesondere dann, wenn die Windenergieanlage bzw. der Windpark an einem Netzanschlusspunkt eines elektrischen Netzes angeschlossen sind, der auf Grund der Netztopologie dazu neigt, eine asymmetrische Spannung aufzuweisen.

Erfindungsgemäß wird ferner eine Windenergieanlage und/oder ein Windpark vorgeschlagen, umfassend wenigstens eine Steuereinheit, die dazu eingerichtet ist, ein vorstehend oder nachstehend beschriebenes Verfahren auszuführen.

Vorzugsweise umfasst die Windenergieanlage oder der Windpark wenigstens einen Wechselrichter und eine Steuereinheit, wobei die Steuereinheit dazu eingerichtet ist, ein vorstehend oder nachstehend beschriebenes Verfahren auszuführen.

Vorzugsweise umfasst die Windenergieanlage oder der Windpark ferner eine Erfassungseinheit, die dazu eingerichtet ist, eine dreiphasige Wechselspannung nach Amplitude und Phasenlage zu erfassen und daraus wenigstens ein symmetrisches Spannungsgegensystem zu berechnen.

Vorzugsweise umfasst die Windenergieanlage oder der Windpark ferner eine Transformationseinheit, die dazu eingerichtet ein symmetrisches Spannungsgegensystem in dq-Koordinaten zu transformieren.

Vorzugsweise umfasst die Windenergieanlage oder der Windpark ferner eine Stromsollwerteinheit, die dazu eingerichtet ist, in dq-Koordinaten Sollwerte für ein Stromgegensystem zu bestimmen.

Vorzugsweise umfasst die Windenergieanlage ferner eine, insbesondere dynamische, Begrenzung von d- und/oder q-Gegensystemstromamplituden.

Die vorstehend beschriebene Erfassungseinheit, die vorstehend beschriebene Transformationseinheit und die vorstehend beschriebene Stromsollwerteinheit können bspw. Bestandteil einer gemeinsamen Steuereinheit sein und miteinander wie nachstehend beschrieben interagieren.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt eine schematische Ansicht einer Windenergieanlage an einem Anschlusspunkt gemäß einer Ausführungsform.
- Fig. 3: zeigt eine schematische Ansicht einer Steuereinheit einer Windenergieanlage gemäß einer Ausführungsform.

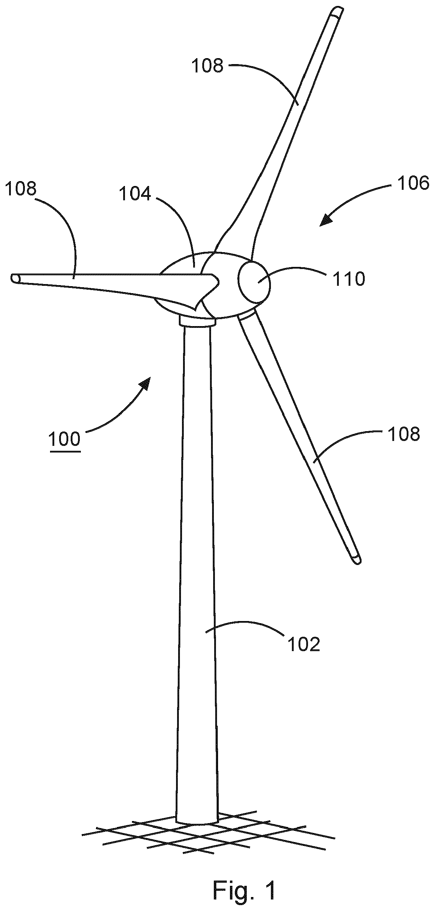

Fig. 1 zeigt eine schematische Ansicht einer Windenergieanlage 100 gemäß einer Ausführungsform.

Die Windenergieanlage 100 weist hierzu einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Der Generator ist mittels eines Wechselrichters an ein elektrisches Netz, bspw. ein Windparknetz oder ein elektrisches Versorgungsnetz, angeschlossen, um einen insbesondere asymmetrischen, dreiphasigen Wechselstrom einzuspeisen.

Hierfür weist der Wechselrichter eine Steuereinheit auf, die dazu eingerichtet ist, ein vorstehend oder nachstehend beschriebenes Verfahren auszuführen.

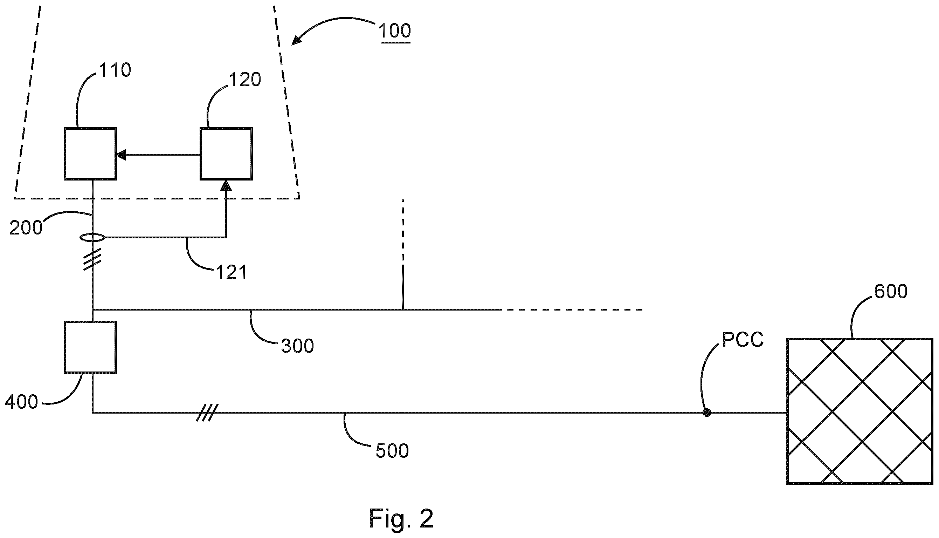

Fig. 2 zeigt eine schematische Ansicht einer Windenergieanlage 100 an einem Anschlusspunkt 200 gemäß einer Ausführungsform.

Die Windenergieanlage 100 weist einen Wechselrichter 110 und eine Steuereinheit 120 auf.

Die Steuereinheit 120 ist dazu eingerichtet, ein vorstehend oder nachstehend beschriebenes Verfahren auszuführen und insbesondere den Wechselrichter 110 so mittels Sollwerten anzusteuern, dass dieser einen asymmetrischen dreiphasigen Wechselstrom erzeugt.

Hierzu weist die Steuereinheit 120 unter anderem eine Spannungserfassung 121 auf, die dazu eingerichtet ist, eine erste Spannung einer ersten Phase, eine zweite Spannung einer zweiten Phase und eine dritte Spannung einer dritten Phase zu erfassen, insbesondere der drei Phasen des Windparknetzes 300.

Der asymmetrische dreiphasige Wechselstrom wird durch den Wechselrichter 110 an dem Anschlusspunkt bspw. in ein Windparknetz 300 eingespeist, welches mehrere Windenergieanlagen miteinander verbindet.

Das Windparknetz 300 ist ferner über einen Transformator 400 und eine Verbindungsleitung 500 an einem Netzanschlusspunkt PCC mit einem elektrischen Versorgungsnetz 600 verbunden.

Bevorzugt weist das elektrische Versorgungsnetz 600 im Bereich des Netzanschlusspunktes PCC eine Topologie mit vorwiegend langen Leitungen auf, also Leitungen mit einer Länge größer 100km. Derartige Topologien herrschen vor allem in ländlichen Regionen von Flächenstaaten vor, wie bspw. Kanada oder Russland, und führen dazu, dass am Netzanschlusspunkt eine asymmetrische Spannung vorliegt.

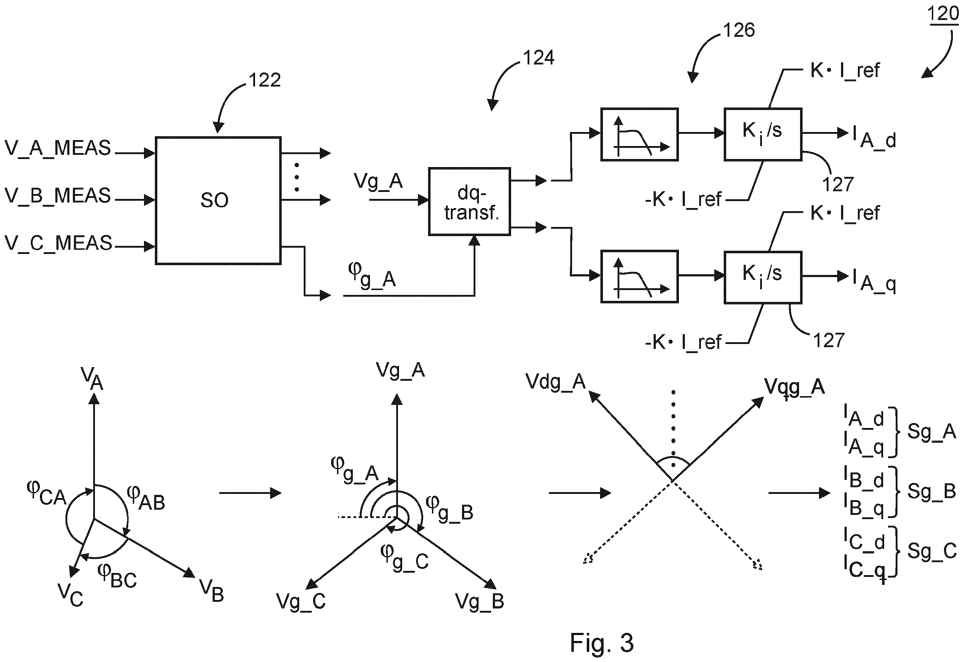

Fig. 3 zeigt eine schematische Ansicht einer Steuereinheit einer Windenergieanlage gemäß einer Ausführungsform.

Die Steuereinheit 120 umfasst wenigstens eine Erfassungseinheit 122, eine Transformationseinheit 124 und eine Stromsollwerteinheit 126 wenigstens aufweisend eine, insbesondere dynamische, Begrenzung von d- und/oder q-Gegensystemstromamplituden 127, 128.

Die Erfassungseinheit 122 ist bevorzugt als State Observer SO ausgebildet und dazu eingerichtet, eine erste Spannung V_A_meas einer ersten Phase A, eine zweite Spannung V_B_meas einer zweiten Phase B und eine dritte Spannung V_C_meas zu erfassen, bevorzugt durch Messen der ersten, zweiten und dritten Phase am Anschlusspunkt der Windenergieanlage, wie bspw. in Fig. 2 gezeigt.

Die Erfassungseinheit 122 erfasst also das unsymmetrische System V_A, V_B, V_C, ϕ_AB, ϕ_BC, ϕ_CA und berechnet daraus ein Spannungsgegensystem umfassend: eine erste Gegensystemspannung Vg_A mit einem ersten Phasenwinkel ϕg_A, eine zweite Gegensystemspannung Vg_B mit einem zweiten Phasenwinkel ϕg_B und eine dritte Gegensystemspannung Vg_C mit einem dritten Phasenwinkel ϕg_C.

Dieses, insbesondere symmetrische, Spannungsgegensystem Vg_A, Vg_B, Vg_C wird durch die Transformationseinheit 124 mittels einer amplitudeninvarianten dq-Transformation in rotierende dq-Koordinaten Vdg_A, Vdg_B, Vdg_C, Vqg_A, Vqg_B, Vqg_C transformiert.

Aus diesen transformierten dq-Koordinaten Vdg_A, Vdg_B, Vdg_C, Vqg_A, Vqg_B, Vqg_C werden dann mittels der Stromsollwerteinheit 126 die Sollwerte Sg_A, Sg_B. Sg_C für ein Stromgegensystem Ig_A, Ig_B, Ig_C berechnet, insbesondere in den dq-Koordinaten IA_d, IA_q, IB_d, IB_q, IC_d, IC_q.

Um die Windenergieanlage bzw. den Wechselrichter vor Überströmen zu schützen wird ferner vorgeschlagen, dass die Stromsollwerteinheit 126 wenigstens eine, insbesondere dynamische, Begrenzung von d- und/oder q-Gegensystemstromamplituden 127, 128 aufweist.

Die Begrenzung von d- und/oder q-Gegensystemstromamplituden 127, 128 umfassend dabei jeweils einen relativen Minimalwert - k * I_ref und einen relativen Maximalwert k * I_ref, wobei k ein einstellbare Konstante ist und I_ref ein veränderlicher Stromreferenzwert, der insbesondere in Abhängigkeit eines Strommitsystems vorgegeben wird.

Die Vorliegende Erfindung sieht also insbesondere vor, dass die aus den im Anschlusspunkt gemessenen dreiphasigen Spannungen berechnete Gegensystemspannung in das rotierende dq-Referenzsystem transformiert wird.

Die d- und q-Komponenten der Gegensystemspannung werden dann bspw. gefiltert um Netzverzerrungen und hochfrequentes Messrauschen auszufiltern.

Die gefilterten d- und q-Komponenten der Gegensystemspannung dienen als Eingangsgröße einer Reglerkette, die durch die Einspeisung von Gegensystemströmen derselben d- und q-Achsen versucht, dass die d- und q-Komponenten der Gegensystemspannung zu Null geregelt werden.

Zur Vermeidung einer im Wesentlichen reinen Gegensystemstromeinspeisung in Spezialfällen und Berücksichtigung der von der Umrichterhardware festgelegten maximalen Ströme wird eine dynamische Begrenzung der d- und q-Gegensystemstromamplituden in Abhängigkeit der aktuellen Referenzwerte für den Mitsystemstrom vorgenommen.

## Patentansprüche

1. Verfahren zum Steuern einer Windenergieanlage und/oder eines wenigstens eine Windenergieanlage aufweisenden Windparks, insbesondere bei asymmetrischen Netzspannungen, umfassend die Schritte:
- Erfassen einer ersten Spannung (V_A_meas) einer ersten Phase (A), einer zweiten Spannung (V_B_meas) einer zweiten Phase (B) und einer dritten Spannung (V_C_meas) einer dritten Phase (C) eines dreiphasigen, elektrischen Systems (ABC),
- Berechnen eines symmetrischen Spannungsgegensystems (Vg_A, Vg_B, Vg_C) aus den erfassten Spannungen (V_A_meas, V_B_meas, V_C_meas), umfassend:
- eine erste Gegensystemspannung (Vg_A),
- eine zweite Gegensystemspannung (Vg_B) und
- eine dritte Gegensystemspannung (Vg_C),
- Vorgeben von Sollwerten (Sg_A, Sg_B. Sg_C) für ein Stromgegensystem (Ig_A, Ig_B, Ig_C) in Abhängigkeit von dem berechneten, symmetrischen Spannungsgegensystem (Vg_A, Vg_B, Vg_C), umfassend:
- eine erste Gegensystemstromkomponente (Ig_A) für die erste Phase (A),
- eine zweite Gegensystemstromkomponente (lg_B) für die zweite Phase (B) und
- eine dritte Gegensystemstromkomponente (Ig_C) für die dritte Phase (C), wobei
die Sollwerte (Sg_A, Sg_B. Sg_C) so bestimmt werden, dass es zu einer Symmetrierung der erfassten Spannungen (V_A_meas, V_B_meas, V_C_meas) kommt,
- Einspeisen eines asymmetrischen dreiphasigen Wechselstromes (IA, IB, IC) in ein Windparknetz oder ein elektrisches Versorgungsnetz in Abhängigkeit der vorgegebenen Sollwerte (Sg_A, Sg_B. Sg_C).

2. Verfahren nach Anspruch 1, wobei
- das Erfassen der ersten, zweiten und dritten Spannung wenigstens ein Messen einer ersten, zweiten und dritten Phase umfasst, insbesondere am Ausgang eines Wechselrichters der Windenergieanlage.

3. Verfahren nach Anspruch 1 oder 2, wobei
- das Erfassen der ersten, zweiten und dritten Spannung ein Ermitteln einer entsprechenden ersten, zweiten und dritten Phasenlage und einer entsprechenden ersten, zweiten und dritten Amplitude umfasst.

4. Verfahren nach einem der vorstehenden Ansprüche, wobei
- das Bestimmen der Sollwerte für einen Punkt an einem Ausgang eines Wechselrichters erfolgt.

5. Verfahren nach einem der vorstehenden Ansprüche, wobei
- das Einspeisen unter Verwendung einer Strombegrenzung mit einem Faktor k erfolgt.

6. Verfahren nach einem der vorstehenden Ansprüche, wobei die Sollwerte mittels einer Transformation ermittelt werden, umfassend die Schritte:
- Transformieren der berechneten Gegensystemspannungen (Vg_A, Vg_B, Vg_C) in dq-Koordinaten (Vdg_A, Vdg_B, Vdg_C, Vqg_A, Vqg_B, Vqg_C) mittels einer amplitudeninvarianten dq-Transformation,
- Transformieren der dq-Koordinaten (Vd_A_g, Vd_B_g, Vd_C_g, Vq_A_g, Vq_B_g, Vq_C_g) in abc-Koordinaten, um die Sollwerte (Sg_A, Sg_B. Sg_C) für ein Stromgegensystem (Ig_A, Ig_B, Ig_C) bereitzustellen.

7. Verfahren nach einem der vorstehenden Ansprüche, ferner umfassend den Schritt:
- Berechnen eines symmetrischen Spannungsmitsystems (Vm_A; Vm_B; Vm_C) aus den erfassten Spannungen (V_A_meas, V_B_meas, V_C_meas), umfassend:
- eine erste Mitsystemspannung (Vm_A),
- eine zweite Mitsystemspannung (Vm_B) und
- eine dritte Mitsystemspannung (Vm_C)

8. Windenergieanlage oder Windpark umfassend wenigstens einen Wechselrichter und eine Steuereinheit, wobei die Steuereinheit dazu eingerichtet ist, ein Verfahren nach einem der Ansprüche 1 bis 7 auszuführen.

9. Windenergieanlage oder Windpark nach Anspruch 8, ferner umfassend eine Erfassungseinheit, die dazu eingerichtet ist, eine dreiphasige Wechselspannung nach Amplitude und Phasenlage (V_A_meas, V_B_meas, V_C_meas) zu erfassen und daraus wenigstens ein symmetrisches Spannungsgegensystem (Vg_A, Vg_B, Vg_C) zu berechnen.

10. Windenergieanlage oder Windpark nach Anspruch 8 oder 9, ferner umfassend eine Transformationseinheit, die dazu eingerichtet ist ein symmetrisches Spannungsgegensystem in dq-Koordinaten (Vdg_A, Vdg_B, Vdg_C, Vqg_A, Vqg_B, Vqg_C) zu transformieren.

11. Windenergieanlage oder Windpark nach einem der Ansprüche 8 bis 10, ferner umfassend eine Stromsollwerteinheit, die dazu eingerichtet ist, aus dq-Koordinaten Sollwerte (Sg_A, Sg_B. Sg_C) für ein Stromgegensystem zu bestimmen.

12. Windenergieanlage oder Windpark nach einem der Ansprüche 8 bis 11, ferner umfassend eine, insbesondere dynamische, Begrenzung von d- und/oder q-Gegensystemstromamplituden.
